# EUROPÄISCHE PATENTSCHRIFT

(11) **EP 4 140 855 B1**
(45) Veröffentlichungstag und Bekanntmachung des Hinweises auf die Patenterteilung: **10.12.2025**
(21) Anmeldenummer: 22188727.6
(22) Anmeldetag: 04.08.2022
(51) Int. Cl.: B62D 1/06, B60R 11/00, B62D 1/08

(54) **LENKVORRICHTUNG FÜR EIN FAHRZEUG, SOWIE FAHRZEUG**
STEERING DEVICE FOR A VEHICLE, AND VEHICLE
DISPOSITIF DE DIRECTION POUR UN VÉHICULE, AINSI QUE VÉHICULE

(30) Priorität: 20.08.2021 DE 102021121699
(43) Veröffentlichungstag der Anmeldung: 01.03.2023
(73) Patentinhaber: Ford Global Technologies, LLC, Dearborn, MI 48126-2701 (US)
(72) Erfinder: Garoosi, Mahdi, 65428 Rüsselsheim (DE); Küpper, Philipp, 41515 Grevenbroich (DE); Kolb, Ulrike, 50769 Köln (DE); Faßbender, Martin, 53913 Buschhoven (DE); Mendes, Rodrigo, 50858 Köln (DE); Löhmann, Lukas, 51570 Windeck (DE); Nitz, Thomas, 51688 Wipperführth (DE)
(74) Vertreter: Markowitz, Markus

(56) Entgegenhaltungen:
- KR-A- 20110 018 112
- US-A1- 2019 084 609
- US-A1- 2020 039 560
- US-A1- 2020 198 684
- US-B1- 10 562 558

## Beschreibung

Die vorliegende Erfindung betrifft eine Lenkvorrichtung für ein Fahrzeug, mit einem Lenkrad, das gebildet ist aus einer Lenkradnabe und einem an der Lenkradnabe schwenkbar gelagerten Lenkradkranz, wobei der Lenkradkranz dazu eingerichtet ist, um eine Lenkradnaben-Achse von einer Lenkposition hin zu zumindest einer Nichtlenk-Position und umgekehrt geschwenkt zu werden. Somit bezieht sich die Erfindung auf das Gebiet sogenannter "Kipplenkräder".

Im Rahmen der vorliegenden Erfindung kann unter einem Fahrzeug insbesondere ein Kraftfahrzeug zur Verwendung im Straßenverkehr verstanden werden. Beispielsweise kann es sich bei dem Fahrzeug um einen PKW, einen LKW, ein Transportfahrzeug, ein Baustellenfahrzeug, ein Agrarfahrzeug, einen Kleintransporter, einen Bus etc. handeln. Die genannte Auflistung ist nicht abschließend.

Aus dem Stand der Technik sind Lenkvorrichtungen basierend auf Kipplenkrädern zum Einsatz bei den beispielhaft genannten Fahrzeugen grundsätzlich bekannt, beispielsweise aus der WO 2018/060443 A1 und der DE 69708735 T2. Um eine ausreichende Bewegungsfreiheit für den Fahrer in Situationen bereitzustellen, in denen er das Lenkrad nicht benötigt, können die beschriebenen Lenkräder in ihrer Gesamtheit verkippt werden. Dies kann zum Beispiel im autonomen Fahrbetrieb eines Fahrzeugs oder bei Fahrzeugstillstand (z.B. bei einer Fahrtpause) vorteilhaft sein. So kann vorgesehen sein, ein "verkipptes" Lenkrad mit wenigen Handgriffen zu einem Tisch (Arbeitstisch, Esstisch) umzufunktionieren. Der Kippmechanismus kann dabei im Bereich der Lenksäule ausgebildet sein. Das der Lenkanordnung zugehörige Lenkrad kann dabei zusätzlich zu der Kippfunktion auf die Bedürfnisse des Fahrers eingestellt werden. Dies kann vornehmlich die Höhe und den Abstand vom Lenkrad zum Fahrer betreffen, wobei dabei die Funktionsfähigkeit des Lenkrades vollständig erhalten bleibt. Bei einer solchen Art der Verstellung (z.B. einer Höhenverstellung) verbleibt das Lenkrad in einer Lenkposition, sodass das Fahrzeug gelenkt werden kann.

Wie eingangs erwähnt, bezieht sich die vorliegende Erfindung auf jene "Kipplenkräder" bzw. Lenkvorrichtungen, bei denen ein Lenkradkranz um eine Lenkradnaben-Achse der Lenkradnabe schwenkbar (kippbar) ist. In der bezeichneten, zumindest einen Nicht-Lenkposition wird der Lenkradkranz nicht zum Lenken des Fahrzeugs verwendet, vielmehr kommt diesem eine zusätzliche Funktion als Ablagefläche für einen Gegenstand zu. So kann einem in einer Nichtlenk-Position befindlichen Lenkradkranz eine Funktion einer Ablagefläche für einen Laptop oder Tablet-Computer, oder eines Tisches zukommen. Ein Tisch kann durch Auflegen eines plattenförmigen Gegenstands (z.B. einer Kunststoffplatte, einer Holzplatte) auf den Lenkradkranz bereitgestellt werden. Entsprechend kann der Fahrer eines Fahrzeugs den Lenkradkranz (nebst dem Steuern des Fahrzeugs) als Ablagefläche für Gegenstände nutzen. Nachteilig dabei ist jedoch, dass - je nach eingestelltem Schwenk- oder Kippwinkel des Lenkradkranzes relativ zur Lenkradnabe - die auf dem Lenkradkranz positionierten Gegenstände verrutschen können und eine unzureichende Lagestabilität aufweisen. Ferner fällt bei den bekannten Systemen auf, dass das Verschwenken des Lenkradkranzes in Bezug zur Lenkradnabe häufig einer wenig intuitiven und wenig nutzerfreundlichen Bedienung unterliegt.

Weitere Lenkvorrichtungen sind aus der US 2020/198684 A1 und der US 2020/039560 A1 bekannt. Die US 2020/198684 A1 und die US 2020/039560 A1 beschreiben die grundsätzliche Möglichkeit einen auf einem Lenkrad abgelegten Gegenstand mittels eines Stützglieds abzustützen.

Entsprechend liegt der vorliegenden Erfindung die Aufgabe zugrunde, eine Lenkvorrichtung bereitzustellen, welche ein ungewünschtes Verrutschen von auf einem Lenkradkranz angeordneten Gegenständen verhindert und zugleich ein nutzerfreundlicheres Verschwenken des Lenkradkranzes in Bezug zur Lenkradnabe ermöglicht. Die gleiche Aufgabe unterliegt dem vorliegend beanspruchten Fahrzeug.

Die Aufgabe wird durch eine Lenkvorrichtung gemäß Anspruch 1 gelöst sowie durch ein Fahrzeug gemäß Anspruch 12.

Die Beschreibung charakterisiert und spezifiziert die Erfindung insbesondere im Zusammenhang mit den Figuren zusätzlich. In jedem Fall bleibt der Umfang der Erfindung durch die Ansprüche definiert.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die Erfindung betrifft zunächst eine Lenkvorrichtung für ein Fahrzeug, mit einem Lenkrad, das gebildet ist, aus einer Lenkradnabe und einem an der Lenkradnabe schwenkbar gelagerten Lenkradkranz, wobei der Lenkradkranz dazu eingerichtet ist, um eine Lenkradnaben-Achse von einer Lenkposition hin zu zumindest einer Nichtlenk-Position und umgekehrt geschwenkt zu werden. Der Lenkradkranz weist einen Aufnahmeabschnitt auf, in welchem ein Stützglied aufgenommen ist, wobei das Stützglied dazu eingerichtet ist, eine erste Stützglied-Stellung und eine zweite Stützglied-Stellung einzunehmen, und ferner dazu eingerichtet ist in der zweiten Stützglied-Stellung und bei gleichzeitiger Positionierung des Lenkradkranzes in der zumindest einen Nichtlenk-Position einen auf dem Lenkradkranz angeordneten Gegenstand, beispielsweise einen Tablet-Computer, gegen ein Verrutschen in Richtung des Stützgliedes abzustützen.

Es sei betont, dass der Lenkradkranz eine oder mehrere Nicht-Lenkpositionen einnehmen kann, bzw. in Richtung einer oder mehrerer Nicht-Lenkpositionen verschwenkt werden kann. Der Lenkradkranz kann insbesondere zwei oder drei Nicht-Lenkpositionen einnehmen. Letztlich hängt die Anzahl der verwirklichten Nicht-Lenkpositionen aber von den Maßgaben des Kunden oder Fahrzeugherstellers ab.

Vorzugsweise ist die die Lenkradnabe bezogen auf deren geometrisch/räumliche Anordnung vom Lenkradkranz umgeben, d.h. innerhalb des Lenkradkranzes angeordnet. Die Schwenklagerung des Lenkradkranzes an der Lenkradnabe kann durch an sich bekannte Mittel (Schwenkmittel) erfolgen. Die genannte Lenkradnaben-Achse verläuft vorzugsweise in Fahrzeugquerrichtung, also quer zur Fahrzeuglängsrichtung. Unter einer "Lenkposition" ist eine Position bzw. Stellung des Lenkradkranzes (relativ zur Lenkradnabe) zu verstehen, in welcher das Fahrzeug durch Drehen des Lenkradkranzes gelenkt werden kann. Unter einer "Nichtlenk-Position" ist eine Position bzw. Stellung zu verstehen, in welcher das Fahrzeug durch Drehen des Lenkradkranzes nicht gelenkt werden kann. Gar kann ein Drehen des Lenkradkranzes in dieser Position blockiert sein. Der bezeichnete "Aufnahmeabschnitt" kann ein Teil des Lenkradkranzes sein, vorzugsweise ist dieser an einem unteren Ende des Lenkradkranzes ausgebildet. Unter der "Aufnahme" eines Stützgliedes kann eine (bewegliche) Lagerung, Führung, Anordnung oder Befestigung zu verstehen sein. Eine bewegliche Lagerung kann eine Schwenklagerung oder eine linearbewegliche Lagerung betreffen.

In der zweiten Stützglied-Stellung stützt das Stützglied einen auf dem Lenkradkranz angeordneten (positionierten) Gegenstand, z. B. einen Laptop, einen Tablet-Computer oder einen plattenförmigen Gegenstand (z. B. ein als Tischplatte fungierendes Holzbrett) in Richtung des Fahrers ab. Ein Verrutschen des Gegenstandes wird dadurch vermieden. Entsprechend kann mit der vorliegenden Erfindung ein auf einem Lenkradkranz positionierter Gegenstand gegen ein Verrutschen gesichert werden, wodurch einerseits der Nutzungskomfort und andererseits die Sicherheitsaspekte verbessert werden. Beispielsweise wird dadurch ein unerwünschtes Verrutschen oder Herunterfallen kostenintensiver elektronischer Geräte (wie Laptops oder Tablet-Computer) vermieden, gleichsam kann die Wahrscheinlichkeit für ein Verschütten von Getränken oder Speisen (die auf einer auf dem Lenkradkranz positionierten Platte abgestellt sein können) verringert werden. Derartige Getränke oder Speisen können - beim Verschütten - Verunreinigungen und Schäden am Fahrzeugmobiliar und der Kleidung eines Fahrgastes bzw. des Fahrers verursachen.

Weitere Ausgestaltungen und Varianten der Erfindung sind in den Unteransprüchen angegeben. Diese (und weitere Ausgestaltungen) seien nachfolgend beschrieben.

Nach einer exemplarischen Ausgestaltung einer Lenkvorrichtung kann vorgesehen sein, dass der Lenkradkranz dazu eingerichtet ist, eine erste und eine zweite Nichtlenk-Position einzunehmen, wobei die erste Nichtlenk-Position vorzugsweise eine um 30° um die Lenkradnaben-Achse in Bezug zur Lenkposition geschwenkte Stellung des Lenkradkranzes betrifft, und wobei die zweite Nichtlenk-Position vorzugsweise eine um mehr als 30° um die Lenkradnaben-Achse in Bezug zur Lenkposition geschwenkte Stellung des Lenkradkranzes betrifft. Je nach gewünschter Verwendung kann die Schwenklage (Neigung) des Lenkradkranzes in der Nicht-Lenkposition (z. B. zur Positionierung eines Tablet-Computers oder als Unterlage für eine Tischplatte) variieren. Eine um 30° in Bezug zur Lenkposition geschwenkte Stellung mag vorteilhaft für eine Positionierung eines Laptops zum Arbeiten sein, während eine mit einem Verschwenken von > 30° verbundene Stellung des Lenkradkranzes Vorteile für die Verwendung als Tisch (zum Essen) bieten kann. Die zweite Nichtlenk-Position kann eine Stellung des Lenkradkranzes betreffen, in welcher sich dieser im Wesentlichen oder exakt in einer Horizontalebene erstreckt. In diesem Fall kann ein planer Gegenstand auf dem Lenkradkranz positioniert werden, um einen planen Tisch bereitzustellen. Es sei betont, dass die erste Nichtlenk-Position eine um einen Winkel von 25° - 50° um die Lenkradnaben-Achse in Bezug zur Lenkposition geschwenkte Stellung des Lenkradkranzes betreffen kann. Der oben angegebene Winkel von 30° ist exemplarischer Natur, besonders vorteilhaft kann ein Winkel von 28°, 29°, 31°, 32° und 45° sein.

Nach einer weiteren exemplarischen Ausgestaltung einer Lenkvorrichtung kann vorgesehen sein, dass das Stützglied in der ersten Stützglied-Stellung eine Oberfläche des Lenkradkranzes ausbildet. Dies meint, dass das Stützglied derart in dem Aufnahmeabschnitt aufgenommen oder positioniert ist, dass das Stützglied in Bezug auf die den Aufnahmeabschnitt umgebende Oberfläche des Lenkradkranzes nicht oder vernachlässigbar nach außen hervorsteht. Dadurch werden Verletzungen vermieden und es wird ein angenehmer haptischer Übergang vom Lenkradkranz zum in der ersten Stützglied-Stellung befindlichen Stützglied bereitgestellt. Dies ist insbesondere bei der Verwendung des Lenkradkranzes bei Lenkmanövern von hoher Relevanz, denn dabei gleitet der Lenkradkranz in der Regel entlang der Handflächen des Fahrers. Es muss jedoch nicht zwingend vorgesehen sein, dass die Oberfläche des in der ersten Stützglied-Stellung befindlichen Stützgliedes mit der Oberfläche des Lenkradkranzes nach außen bündig abschließt, auch kann dieser Teil in Bezug zur Oberfläche des Lenkradkranzes hervorstehen, solange ein haptischer Übergang zwischen der Oberfläche des Lenkradkranzes und des Stützgliedes bereitgestellt wird, der ein angenehmes Gleiten des Lenkradkranzes durch die Hände eines Fahrers ermöglicht und Verletzungen beim Lenken vermeidet.

Nach einer weiteren exemplarischen Ausgestaltung einer einer Lenkvorrichtung kann vorgesehen sein, dass der Lenkradkranz unter Einsatz eines Schwenkantriebs, insbesondere eines elektrischen Schwenkantriebs, um die Naben-Achse schwenkbar ist. Ein solcher Schwenkantrieb erleichtert das Schwenken des Lenkradkranzes im Vergleich zu einem manuellen Verschwenken. Es kann somit vorgesehen sein, dass der Lenkradkranz (unter Einsatz des Schwenkantriebs) vollständig automatisiert oder halbautomatisiert um die Naben-Achse schwenkbar ist. Der Schwenkantrieb kann beispielsweise im Bereich der Lenkradnabe angeordnet sein. Auch eine anderweitige Positionierung ist denkbar, solange eine mechanische Wirkübertragung (Bewegungsübertragung) auf den Lenkradkranz ermöglicht ist. Der Schwenkantrieb kann von einer elektrischen On-Board Versorgung des Fahrzeugs mit Energie versorgt werden und an ein elektrisches Netz des Fahrzeugs angeschlossen sein.

Nach einer weiteren exemplarischen Ausgestaltung einer Lenkvorrichtung kann vorgesehen sein, dass das Stützglied ein Betätigungsmittel für den Schwenkantrieb bereitstellt, wobei das Stützglied derart mit dem Schwenkantrieb wirkverbunden ist, dass der Schwenkantrieb bei Betätigung des Betätigungsmittels den Lenkradkranz von der Lenkposition in die zumindest eine Nichtlenk-Position oder umgekehrt schwenkt. Durch eine Betätigung des Betätigungsmittels (also des Stützgliedes) kann somit ein Verschwenken des Lenkradkranzes bewirkt werden. Die Betätigung erfolgt dabei durch einen Nutzer des Fahrzeugs (z. B. einen Fahrer). Das Betätigungsmittel kann mit einem Controller (z. B. Mikrocontroller) verbunden sein, der einen Auslösebefehl für eine erwünschte Schwenkbewegung des Lenkradkranzes (z. B. von der Lenkposition in die erste Nichtlenk-Position, von der ersten in die zweite Nichtlenk-Position oder umgekehrt) erzeugt und diesen an den Schwenkantrieb weitergibt. Entsprechend kann ein solcher Controller sowohl mit dem Betätigungsmittel als auch mit dem Schwenkantrieb signaltechnisch verbunden sein. Gleichsam kann die genannte Verbindung zwischen Betätigungsmittel und Schwenkantrieb mechanischer Natur sein.

Erfindungsgemäß ist der Aufnahmeabschnitt ein Lagerabschnitt, wobei das Stützglied in dem Lagerabschnitt schwenkbar um eine Lagerabschnitts-Achse gelagert ist, nämlich derart, dass das Stützglied eine die erste Stützglied-Stellung bereitstellende erste Schwenkposition und eine die zweite Stützglied-Stellung bereitstellende zweite Schwenkposition einnehmen kann, wobei das Stützglied dazu eingerichtet ist, in der zweiten Schwenkposition und bei gleichzeitiger Positionierung des Lenkradkranzes in der zumindest einen Nichtlenk-Position einen auf dem Lenkradkranz angeordneten Gegenstand, beispielsweise einen Tablet-Computer, gegen ein Verrutschen in Richtung des Stützglieds abzustützen. Um die durch die Erfindung bereitgestellte Abstützfunktion für einen auf dem Lenkradkranz positionierten Gegenstand zu erfüllen, muss das Stützglied in die erwähnte zweite Schwenkposition geschwenkt werden. Dazu kann das Stützglied beispielsweise um einen Winkel von ungefähr (oder exakt) 90° im Vergleich zur ersten Schwenkposition um die Lagerabschnitts-Achse geschwenkt werden. Vorzugsweise ist der Aufnahmeabschnitt (Lagerabschnitt) an einem unteren Ende des Lenkradkranzes ausgebildet.

Nach einer weiteren exemplarischen Ausgestaltung einer Lenkvorrichtung kann vorgesehen sein, dass das Stützglied ein derartiges Betätigungsmittel für den Schwenkantrieb bereitstellt, bei dem durch Schwenken des Stützglieds von der zweiten Schwenkposition in Richtung einer der ersten Schwenkposition abgewandten Schwenkrichtung um einen vorgegebenen Auslöseschwenkwinkel, eine Schwenkbewegung des Lenkradkranzes von der Lenkposition hin zu der ersten Nichtlenk-Position oder von der ersten Nichtlenk-Position zur zweiten Nichtlenk-Position ausgelöst wird. Der Auslöseschwenkwinkel kann beispielsweise einen Wert von ungefähr oder exakt 10° annehmen. Auch andere Winkelwerte sind möglich. Entsprechend kann ein Fahrzeuginsasse (oder Fahrer) über den Schwenkwinkel des Stützgliedes einstellen, ob ein Schwenken des Lenkradkranzes ausgelöst werden soll oder ob lediglich eine Stützfunktion des Stützgliedes bereitgestellt werden soll. Befindet sich der Lenkradkranz in der ersten oder zweiten Nichtlenk-Position kann durch Einklappen (Schwenken) des Stützgliedes von der zweiten Schwenkposition hin zur ersten Schwenkposition ein Schwenken des Lenkradkranzes von der zweiten Nichtlenk-Position hin zur ersten Nichtlenk-Position, von der ersten Nichtlenk-Position zur Lenkposition oder von der zweiten Nichtlenk-Position zur Lenkposition ausgelöst werden.

Nach einer weiteren exemplarischen Ausgestaltung einer Lenkvorrichtung kann vorgesehen sein, dass das Stützglied ein Betätigungsmittel für einen Entriegelungs- und/oder Verriegelungsmechanismus in Bezug auf eine Schwenkmechanik des Lenkradkranzes bereitstellt. Es kann somit vorgesehen sein, mittels einer Betätigung des Stützglieds die Schwenkmechanik des Lenkradkranzes zu entriegeln (also freizugeben) oder die Schwenkmechanik des Lenkradkranzes zu verriegeln (zu sperren). Je nach Ausbildung des Stützglieds kann die Art der Betätigung des Stützglieds (Verschwenken, Druckbetätigung etc.) variieren. Beispielsweise kann vorgesehen sein, dass das Stützglied ein derartiges Betätigungsmittel für den Entriegelungs- und/oder Verriegelungsmechanismus betreffend die Schwenkmechanik des Lenkradkranzes bereitstellt, bei dem durch Schwenken des Stützglieds von der zweiten Schwenkposition in Richtung einer der ersten Schwenkposition abgewandten Schwenkrichtung um einen vorgegebenen Auslöseschwenkwinkel, die Schwenkmechanik entriegelt oder verriegelt wird. Ein Entriegeln/Verriegeln kann ferner durch Schwenken des Stützglieds von der ersten Schwenkposition zur zweiten Schwenkposition oder umgekehrt ausgelöst werden. Das Schwenken des Lenkradkranzes kann dann manuell, d.h. händisch durch einen Fahrer oder Insassen des Fahrzeugs, durchgeführt werden. Grundsätzlich ist aber auch in diesem Fall vorstellbar, dass das Schwenken des Lenkradkranzes über Schwenkantrieb unterstützt oder vollständig ausgeführt wird. Das Stützglied kann mechanisch oder elektrisch mit dem Entriegelungs- und/oder Verriegelungsmechanismus verbunden sein, beispielsweise über einen Bowden-Zug oder eine elektrische Signalleitung.

Nach einer weiteren exemplarischen Ausgestaltung einer Lenkvorrichtung kann vorgesehen sein, dass der Lagerabschnitt ein Lagerholm ist, der einen im Wesentlichen kreisförmigen Querschnitt aufweist, wobei an dem Lagerholm ein Rastnocken ausgebildet ist. Der Lagerholm kann einen unteren Abschnitt des Lenkradkranzes ausbilden. Der Lagerholm kann Bestandteil eines einstückigen oder mehrteiligen Lenkradkranzes sein. Der Lagerholm kann aus einem beliebigen Material gefertigt sein, beispielsweise Metall oder Kunststoff. Der Lagerholm kann innen hohl oder aus einem Vollmaterial ausgebildet sein. Der Rastnocken ist nach außen gerichtet und an den Lagerholm angeflanscht. Der Rastnocken kann einteiliger Bestandteil des Lagerholms sein.

Nach einer weiteren exemplarischen Ausgestaltung einer Lenkvorrichtung kann vorgesehen sein, dass das Stützglied zwei Lagerkragen aufweist, mit welchen das Stützglied auf dem Lagerholm schwenkbar gelagert ist, wobei ein jeder Lagerkragen zumindest teilweise an die Querschnittsform des Lagerholms angepasst ist. Die Lagerkragen umfassen den Lagerholm zumindest teilweise, vorzugsweise derart, dass eine Schwenklagerung bereitgestellt werden kann. Daher können die Lagerkragen derart ausgebildet sein, dass diese auf den Lagerholm geklippt werden können, sodass eine lösbare Befestigung ermöglicht wird. Auch eine anderweitige lösbare Befestigung der Lagerkragen ist denkbar. Auch kann vorgesehen sein, dass die Lagerkragen unlösbar auf dem Lagerholm schwenkbar gelagert sind. Auch können mehr als zwei Lagerkragen zur Schwenklagerung auf dem Lagerholm vorgesehen sein. Gleichsam ist vorstellbar, dass lediglich ein einzelner Lagerkragen vorgesehen ist, der sich nahezu über die gesamte Länge des Lagerholms erstreckt.

Das Stützglied kann als Kunststoffbauteil ausgeführt sein, beispielsweise als metallisiertes Kunststoffbauteil. Das Kunststoffbauteil als Solches kann als 1-Komponenten- oder Mehrkomponenten-Kunststoffbauteil ausgeführt sein. Die Ausbildung aus Kunststoff ist vorteilhaft für eine kostengünstige Serienfertigung hoher Stückzahlen.

Nach einer weiteren exemplarischen Ausgestaltung einer Lenkvorrichtung kann vorgesehen sein, dass an dem Lagerkragen eine erste und eine zweite Rastnockenaufnahme ausgebildet ist, in welche der Rastnocken in der ersten respektive zweiten Schwenkposition des Stützglieds eingreift. Dadurch wird ein unbeabsichtigtes Verschwenken des Stützgliedes aus der ersten respektive zweiten Schwenkposition vermieden. Der Eingriff der Rastnocke(n) in die Rastnockenaufnahme(n) wirkt somit einem ungewünschten Verschwenken entgegen und arretiert das Stützglied. Wird jedoch ein bestimmter Kraftbetrag bei der Betätigung des Stützgliedes überschritten, kann ein Verschwenken erfolgen. Der Eingriff der Rastnocke(n) in die Rastnockenaufnahme(n) sorgt für eine Sicherungsarretierung des Stützgliedes in seiner jeweiligen Schwenkposition. Eine jeweilige Rastnockenaufnahme kann nach Art einer sich entlang des Lagerkragens erstreckenden Nut (ggf. nach Art einer V-förmigen Nut) ausgebildet sein.

Nach einer weiteren exemplarischen Ausgestaltung einer Lenkvorrichtung kann vorgesehen sein, dass die Lagerkragen über eine nach Art eines Verbindungsstegs ausgebildete Handhabe miteinander verbunden sind. Die Handhabe bzw. der Verbindungssteg kann sich dabei in Richtung des Lagerholms erstrecken bzw. nahezu parallel zu diesem verlaufen. Über die Handhabe kann das Stützglied geschwenkt werden, d.h. ein Nutzer kann die Handhabe mit seinen Händen greifen und eine Schwenkbewegung ausführen. Die Handhabe ist vorzugsweise aus einem haptisch angenehmen Material gefertigt bzw. mit einem solchen Material beschichtet.

Erfindungsgemäß ist das Stützglied in Richtung der ersten Schwenkposition federvorgespannt. Dies bedeutet, dass das Stützglied derart gelagert ist, dass es bestrebt ist die erste Schwenkposition einzunehmen. Nur durch Aufbringen einer bestimmten, die Federkraft überwindenden Gegenkraft kann das Stützglied verschwenkt werden. Befindet sich das Stützglied in der zweiten Schwenkposition, so kann ein sich daran abstützender Gegenstand ein Zurückschwenken des Stützgliedes in die erste Schwenkposition verhindern. Bei der ersten Schwenkposition handelt es sich um eine Ausgangsstellung des Stützglieds, also eine Stellung, die das Stützglied ohne Betätigung einnimmt (nicht-verschwenkte Stellung). Durch die vorbeschriebene Federvorspannung kann das Stützglied eine federgelagerte Rückstellung bei Nicht-Benutzung erfahren.

Es kann vorgesehen sein, das Stützglied an ein Rückstellsystem anzukoppeln, welches eine selbständige Rückstellung des Stützgliedes in die erste Stützgliedstellung beim bzw. nach Verschwenken des Lenkradkranzes in die Lenkposition bewirkt. Die erste Stützgliedstellung betrifft jene Stellung des Stützglieds, in welchem dieses keine Stützfunktion einnimmt (eingeklappte, eingefahrene Stellung). Die selbständige Rückstellung kann durch eine entsprechende Rückstell-Mechanik oder eine sensorbasierte Rückstellung erfolgen. Die erwähnte sensorbasierte Rückstellung kann einen Lagesensor umfassen, welcher dazu eingerichtet ist, die Lage des Lenkradkranzes zu erkennen. Im Falle eines Verschwenkens des Lenkradkranzes in die Nicht-Lenkposition wird diese Stellung vom Lagesensor erkannt und ein Signal zur selbständigen Rückstellung des Stützgliedes ausgelöst, wodurch eine Rückstell-Mechanik in Gang gesetzt werden kann. Grundsätzlich können beliebige Lagen (des Lenkradkranzes, des Stützgliedes oder beider Bauteile) vordefiniert werden, in welchen eine selbständige Rückstellung erfolgen soll.

Jedoch ist auch vorstellbar, das Stützglied mechanisch an die Stellung des Lenkradkranzes anzukoppeln, womit gemeint ist, dass beim Schwenken des Lenkradkranzes in die Lenkposition mechanisch die Rückstellung des Stützgliedes in die erste Stützgliedstellung ausgelöst wird. Gleiches kann bei entsprechender Entriegelung des Lenkradkranzes erfolgen, sodass ein Entriegeln des Lenkradkranzes (sei dies über eine entsprechende Betätigung des Stützgliedes oder anderweitig) eine selbständige Rückstellung des Stützgliedes in die erste Stützgliedstellung bewirkt. Es sei betont, dass anstelle einer mechanischen Kopplung auch eine signaltechnische Kopplung zwischen Rückstellsystem und dem entsprechenden Auslöser der Rückstellung vorgesehen sein kann.

Nach einer weiteren Ausgestaltung einer erfindungsgemäßen Lenkvorrichtung kann vorgesehen sein, dass das Stützglied in der ersten Stützglied-Stellung ein optisches Dekorelement des Lenkrads ausbildet. Da bei Fahrzeugbauteilen, insbesondere bei Bauteilen des Fahrzeuginnenraums, immer auch der optische Eindruck von Bedeutung ist, kann das Stützglied ein optisches Dekorelement des Lenkrads ausbilden. Beispielsweise kann die Oberfläche des Stützgliedes metallisiert, z.B. verchromt sein. Auch eine metallisch-matte Optik oder eine farbige Ausführung ist möglich. Jegliches optisch ansprechende Design kann im Bereich des Stützgliedes verwirklicht sein, sei es durch eine entsprechende Materialauswahl, Farbauswahl, oder Musterstrukturierung der äußeren Stützglied-Oberfläche.

Das Stützglied kann in der ersten Stützglied-Stellung zudem eine Schutzabdeckung für einen oder mehrere elektrische Anschlüsse bereitstellen. Der oder die elektrischen Anschlüsse sind dabei insbesondere in den Lenkradkranz integriert (im Bereich des Stützglieds) integriert. Unter einem elektrischen Anschluss kann vorliegend ein elektrischer Anschluss zur Strom- und Spannungsversorgung (z.B. zum Laden eines mobilen Endgeräts) oder zur Ankopplung eines Funktionsbauteils (z.B. eines auf dem Lenkradkranz positionierbaren Tischs) zu verstehen sein. Beispielsweise kann an einen solchen elektrischen Anschluss eine Vorrichtung für induktives Laden angekoppelt sein, mit welcher beispielsweise mobile Endgeräte (wie Smartphones) induktiv geladen werden können. Auch kann ein Audio-, Video-, USB- oder anderweitiger Anschluss (also ein Anschluss für eine Signal- oder Datenverbindung) unter einem "elektrischen Anschluss" subsumiert werden. Derartige elektrische Anschlüsse sind in der Regel empfindlich gegenüber Verschmutzungen und Feuchtigkeit, was ihre Lebensdauer reduzieren kann. Das Stützglied kann eine Schutzabdeckung für derartige Anschlüsse bereitstellen und sie (z.B. in der ersten Stützgliedstellung) bedecken. Durch die Abdeckung können Beschädigungen der elektrischen Anschlüsse, sowie Verunreinigungen und Korrosion durch Feuchtigkeit verhindert oder reduziert werden. Weiterhin wird die erfindungsgemäße Aufgabe - wie erwähnt - durch ein Fahrzeug mit einer erfindungsgemäßen Lenkvorrichtung gelöst. Bei dem Fahrzeug kann es sich um ein radgebundenes Fahrzeug, insbesondere ein Straßenfahrzeug, handeln. Dabei kann es sich um einen PKW, einen LKW, ein Agrarfahrzeug, ein Baustellenfahrzeug, einen Gabelstapler, einen Kleintransporter, ein Transportfahrzeug, ein Lastenfahrzeug, ein Nutzfahrzeug oder dergleichen handeln. Auch bei Zweirädern, motorisierten oder elektrisch betriebenen Rollstühlen, Elektro-Scootern oder anderen kann die Erfindung zum Einsatz kommen.

Die Erfindung wird anhand der nachfolgenden Figuren näher erläutert. Diese sind nur beispielhaft zu verstehen und sollen die Erfindung nicht auf die gezeigten Ausführungsbeispiele beschränken.

Es zeigen:
Fig. 1 a-c eine schematische Darstellung einer exemplarischen Lenkvorrichtung nach einer ersten Ausführungsform, die nicht Gegenstand der vorliegenden Erfindung ist, wobei Fig. 1a und 1b eine Lenkposition wiedergeben, und wobei Fig. 1c eine Nichtlenk-Position wiedergibt;
Fig. 2 a-c eine schematische Querschnitts-Darstellung eines Ausschnitts der exemplarischen Lenkvorrichtung nach der ersten Ausführungsform, wobei die Figuren 2 a-c den Vorgang des Verschwenkens des Stützglieds veranschaulichen;
Fig. 3 eine schematische Querschnittdarstellung eines Ausschnitts der exemplarischen Lenkvorrichtung nach der ersten Ausführungsform, wobei nebst einer Lenkposition, eine erste und eine zweite Nichtlenk-Position des Lenkradkranzes wiedergegeben ist;
Fig. 4 a, b schematische Darstellungen zur Positionierung eines Gegenstandes auf einem Lenkradkranz bei einer Lenkvorrichtung gemäß der ersten exemplarischen Ausführungsform;
Fig. 5 eine schematische Perspektivansicht eines exemplarischen Stützgliedes, wobei der Aufbau des Stützgliedes zu den in den Figuren 1 bis 4 gezeigten Varianten abweicht;
Fig. 6 a, b eine schematische Darstellung einer erfindungsgemäßen Lenkvorrichtung nach einer zweiten Ausführungsform, wobei Fig 6a das Stützglied in einer ersten Stützglied-Stellung und Fig. 6b das Stützglied in einer zweiten Stützglied-Stellung zeigt;
Fig. 7 eine schematische Querschnitts-Darstellung der Funktionsweise des Stützglieds gemäß der zweiten Ausführungsform der erfindungsgemäßen Lenkvorrichtung;
Fig. 8 eine Variante zur Darstellung nach Fig. 7;
Fig. 9 a, b eine schematische Darstellung einer dritten Ausführungsform der Lenkvorrichtung, die nicht Gegenstand der vorliegenden Erfindung ist. Fig 9a zeigt das Stützglied in einer ersten Stützglied-Stellung und Fig. 9b zeigt das Stützglied in einer zweiten Stützglied-Stellung; und
Fig. 10 eine schematische Querschnitts-Darstellung der Funktionsweise des Stützglieds gemäß einer dritten Ausführungsform der Lenkvorrichtung, die nicht Gegenstand der vorliegenden Erfindung ist.

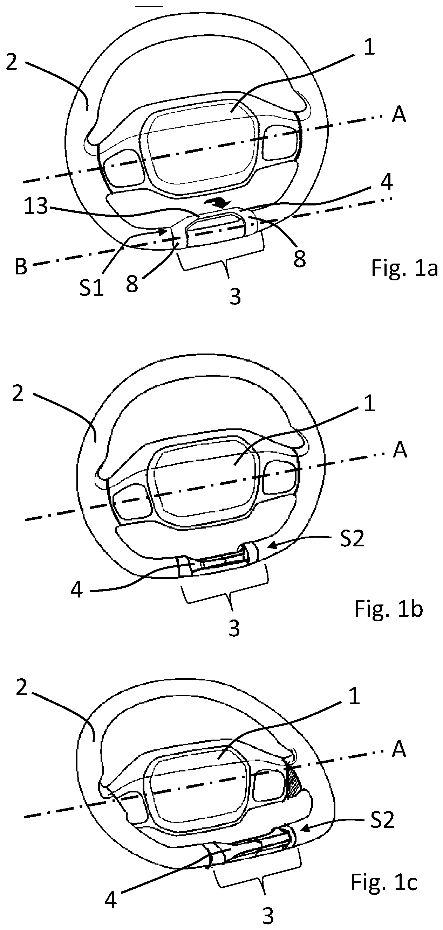

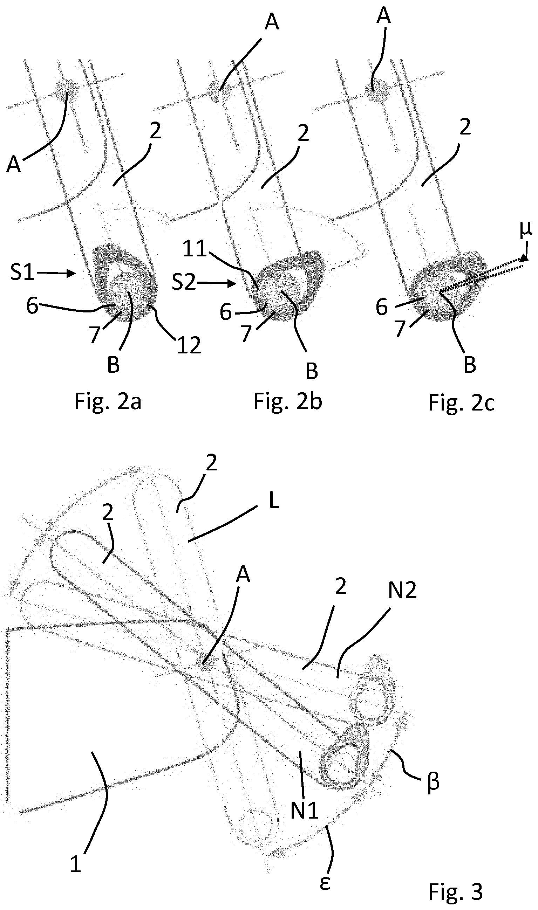

Fig. 1 zeigt eine erste exemplarische Ausführungsform einer Lenkvorrichtung für ein Fahrzeug, die nicht Gegenstand der Erfindung ist. Diese umfasst ein Lenkrad, das gebildet ist aus einer Lenkradnabe 1 und einem an der Lenkradnabe 1 schwenkbar gelagerten Lenkradkranz 2. Der Lenkradkranz 2 kann um eine Lenkradnaben-Achse A von einer Lenkposition L hin zu zumindest einer Nichtlenk-Position N1, N2 und umgekehrt geschwenkt werden. In den Figuren 1a, 1b ist das Lenkrad in einer Lenkposition L wiedergegeben, während die Figur 1c auf eine Nichtlenk-Position N1, N2 abstellt. Die Schwenkbarkeit des Lenkradkranzes 2 um die Lenkradnaben-Achse A ist in der Figur 3 in einer Querschnittsansicht schematisch illustriert. Gemäß der dortigen Perspektive führt ein Schwenken des Lenkradkranzes 2 entgegen dem Uhrzeigersinn von einer Lenkposition L um einen Schwenkwinkel ε zunächst zu einer ersten Nichtlenk-Position N1. Ein weiteres Schwenken entgegen dem Uhrzeigersinn um einen Schwenkwinkel β bewegt den Lenkradkranz 2 von der ersten Nichtlenk-Position N1 hin zu einer zweiten Nichtlenk-Position N2. In der ersten und zweiten Nichtlenk-Position N1, N2 kann ein Sperrmechanismus greifen, der ein Lenken des Lenkrads verhindert. Die erste Nichtlenk-Position N1 betrifft vorzugsweise eine um 30° (oder einen Winkel von 25° bis 50°) um die Lenkradnaben-Achse A in Bezug zur Lenkposition L geschwenkte Stellung des Lenkradkranzes 2. Die zweite Nichtlenk-Position N2 betrifft (wie in Fig. 3 illustriert) eine um mehr als 30° um die Lenkradnaben-Achse A in Bezug zur Lenkposition L geschwenkte Stellung des Lenkradkranzes 2.

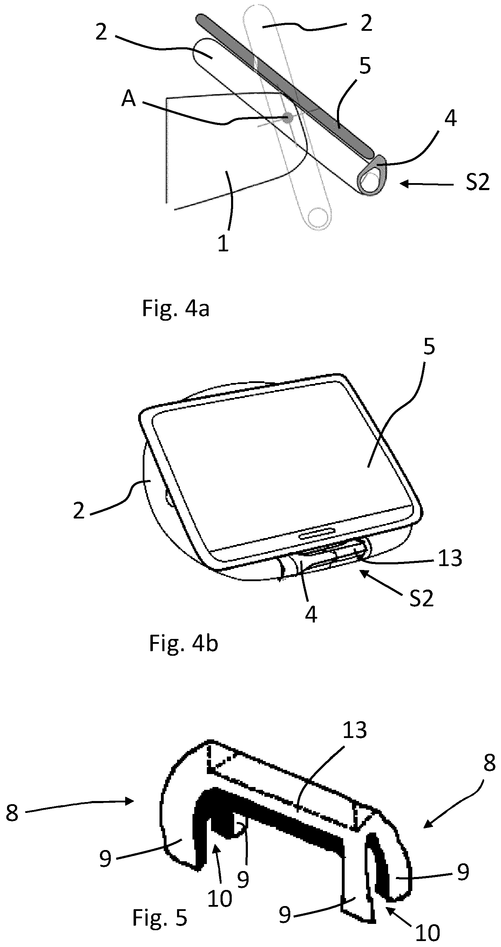

Bei sämtlichen in den Figuren dargestellten Ausführungsformen der erfindungsgemäßen Lenkvorrichtung weist der Lenkradkranz 2 einen Aufnahmeabschnitt 3 auf, in welchem ein Stützglied 4 aufgenommen ist, wobei das Stützglied 4 dazu eingerichtet ist, eine erste Stützglied-Stellung S1 und eine zweite Stützglied-Stellung S2 einzunehmen und wobei das Stützglied 4 ferner dazu eingerichtet ist, in der zweiten Stützglied-Stellung S2 und bei gleichzeitiger Positionierung des Lenkradkranzes 2 in der zumindest einen Nichtlenk-Position N1, N2 einen auf dem Lenkradkranz 2 angeordneten Gegenstand 5, beispielsweise einen Tablet-Computer, gegen ein Verrutschen in Richtung des Stützgliedes 4 abzustützen. Letzteres ist beispielsweise in den Figuren 4a, 4b, 7, 8 und 10 illustriert. Das Stützglied 4 bildet in der ersten Stützglied-Stellung S1 eine Oberfläche des Lenkradkranzes 2 aus (vgl. Fig. 1a, 6a, 9a).

Der Lenkradkranz 2 ist unter Einsatz eines (nicht dargestellten) Schwenkantriebs, insbesondere eines elektrischen Schwenkantriebs, um die Lenkradnaben-Achse A schwenkbar. Das Stützglied 4 dient dabei als Betätigungsmittel für den Schwenkantrieb, wobei das Stützglied 4 derart mit dem Schwenkantrieb wirkverbunden ist, dass der Schwenkantrieb bei Betätigung des Betätigungsmittels den Lenkradkranz 2 von der Lenkposition L in die zumindest eine Nichtlenk-Position N1, N2 oder umgekehrt schwenkt. Durch Betätigen des Stützgliedes 4 kann der Lenkradkranz 2 somit verschwenkt werden. Im Übrigen gilt dies nicht nur für ein Verschwenken von der Lenkposition L hin zur ersten Nichtlenk-Position N1, sondern auch für ein Verschwenken von der ersten Nichtlenk-Position N1 zur zweiten Nichtlenk-Position N2.

Bezogen auf die erste exemplarische Ausführungsform (Fig. 1 bis 5) ist festzuhalten, dass Aufnahmeabschnitt 3 ein Lagerabschnitt ist, wobei das Stützglied 4 in dem Lagerabschnitt schwenkbar um eine Lagerabschnitts-Achse B (vgl. Fig. 1a, 2a-c) gelagert ist, nämlich derart, dass das Stützglied eine die erste Stützglied-Stellung S1 bereitstellende erste Schwenkposition und eine die zweite Stützglied-Stellung S2 bereitstellende zweite Schwenkposition einnehmen kann, wobei das Stützglied 4 dazu eingerichtet ist, in der zweiten Schwenkposition und bei gleichzeitiger Positionierung des Lenkradkranzes 2 in der zumindest einen Nichtlenk-Position N1, N2 einen auf dem Lenkradkranz 2 angeordneten Gegenstand 5, beispielsweise einen Tablet-Computer, gegen ein Verrutschen in Richtung des Stützglieds 4 abzustützen.

In den Figuren 2a bis c ist illustriert, dass das Stützglied 4 ein derartiges Betätigungsmittel für den Schwenkantrieb bereitstellt, bei dem durch Schwenken des Stützglieds 4 von der zweiten Schwenkposition (korrespondierend zur zweiten Stützglied-Stellung S2) in Richtung einer der ersten Schwenkposition (erste Stützglied-Stellung S1) abgewandten Schwenkrichtung um einen vorgegebenen Auslöseschwenkwinkel µ (vgl. Fig. 2b und 2c), eine Schwenkbewegung des Lenkradkranzes 2 von der Lenkposition L hin zu der ersten Nichtlenk-Position N1 oder von der ersten Nichtlenk-Position N1 zur zweiten Nichtlenk-Position N2 ausgelöst wird.

Wie in den Figuren 2a bis 2c zu erkennen, ist der Lagerabschnitt als Lagerholm 6 ausgebildet, der einen im Wesentlichen kreisförmigen Querschnitt aufweist, wobei an dem Lagerholm 6 ein Rastnocken 7 ausgebildet ist. Im Bereich des Rastnockens 7 weicht die Querschnittsform von der Kreisform ab.

Die Figuren 1a und 5 lassen erkennen, dass das Stützglied 4 zwei Lagerkragen 8 aufweist, mit welchen das Stützglied 4 auf dem Lagerholm 6 schwenkbar gelagert ist, wobei ein jeder Lagerkragen 8 zumindest teilweise an die Querschnittsform des Lagerholms 6 angepasst ist. Die Lagerkragen 8 können jeweils zwei Schenkel 9 aufweisen, die eine U-förmige Öffnung 10 ausbilden. Mit dieser Öffnung 10 lässt sich das Stützglied 4 lösbar auf den Lagerholm 6 klippen und befestigen. Die Schenkel 9 können dazu nach Art von federelastischen Armen ausgebildet sein. Alternativ weist die Öffnung 10 keine U-Form auf, sondern ist vollständig vom Material der Schenkel 9 umgeben (vgl. Fig. 2a-c). An den jeweiligen Lagerkragen 8 ist eine erste und eine zweite Rastnockenaufnahme 11, 12 ausgebildet , in welche der jeweilige Rastnocken 7 in der ersten respektive zweiten Schwenkposition des Stützglieds 4 eingreift (vgl. Fig. 2a-c). Die erste Rastnockenaufnahme 11 ist deutlich in der Fig. 2b zu erkennen, während die zweite Rastnockenaufnahme 12 in der Fig. 2a zu erkennen ist. Je nach Schwenkposition des Stützgliedes 4 (vgl. Fig. 2a-c) greift der Rastnocken 7 in die erste oder zweite Rastnockenaufnahme 11, 12 ein und arretiert das Stützglied 4. Die erste und zweite Rastnockenaufnahme 11, 12 bilden somit Widerlager für das Stützglied 4. Wie in den Figuren 1 bis 5 zu erkennen ist, sind die Lagerkragen 8 über eine nach Art eines Verbindungsstegs ausgebildete Handhabe 13 miteinander verbunden. Die Figuren 4a und 4b illustrieren anschaulich, wie ein bestimmter Gegenstand 5 auf dem Lenkradkranz 2 positioniert werden kann und durch das Stützglied 4 gegen ein Verrutschen gesichert ist.

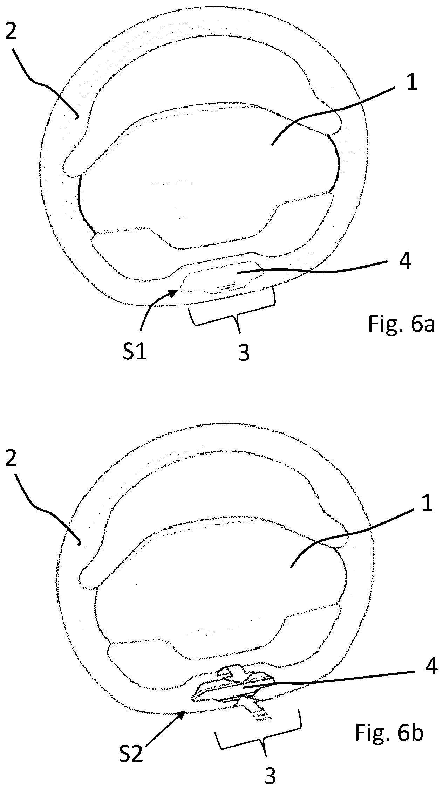

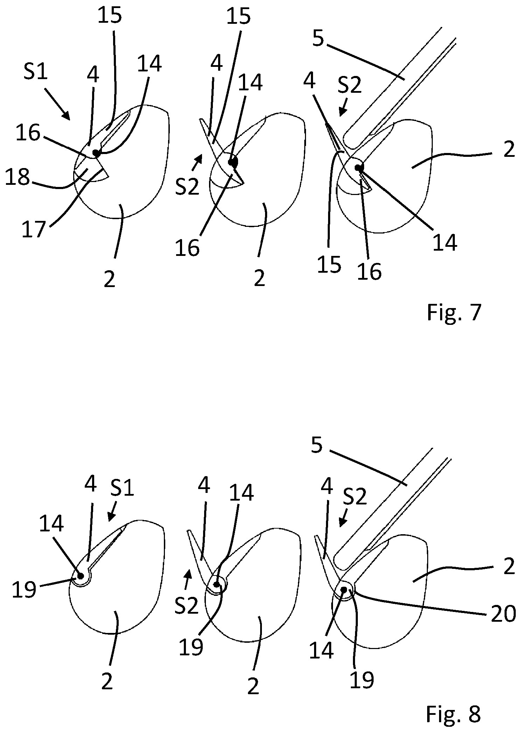

Erfindungsgemäß, wie in Abb. 6 - 8 dargestellt, ist das Stützglied 4 in Richtung der ersten Schwenkposition (erste Stützglied-Stellung S1) federvorgespannt. Dies bedeutet, dass das Stützglied ohne zusätzliche Krafteinwirkung bestrebt ist, in der ersten Schwenkposition zu verbleiben. In der Fig. 6a ist das Stützglied 4 in der ersten Stützglied-Stellung S1 gezeigt, Figur 6b stellt auf die zweite Stützglied-Stellung S2 ab. Das Stützglied 4 wird bei dieser Ausführungsvariante durch Verschwenken zwischen den Stellungen S1, S2 bewegt (vgl. auch die Pfeildarstellungen in Fig. 6b). Erfindungsgemäß ist in den Figuren 7 und 8 erkennbar, dass das Stützglied 4 in einem Federgelenk 14 gelagert ist. Das in der Figur 7 dargestellte Stützglied weist eine Stützzunge 15 zum Abstützen des Gegenstands 5 in der zweiten Schwenkposition bzw. zweiten Stützglied-Stellung S2 (Fig. 7 Rechts) auf. An die Stützzunge 15 schließt sich ein Widerlager-Flansch 16 an, der sich in der zweiten Stützglied-Stellung S2 (Fig. 7 Mitte und Fig. 7 Rechts) an einer Abstützkante 17 des Lenkradkranzes 2 abstützt. Die Abstützkante 17 ist im Bereich einer Ausnehmung 18 des Lenkradkranzes 2 ausgebildet, die zur Aufnahme des Stützglieds 4 vorgesehen ist. Die Fig. 8 zeigt eine Variante zur Ausbildung des Stützglieds 4, wobei das Stützglied 4 im Vergleich zur Variante nach Fig. 7 keinen zusätzlichen Widerlager-Flansch 16 aufweist. Vielmehr stützt sich das Stützglied 4 in der zweiten Stützglied-Stellung S2 mit einem das Federgelenk 14 umgebenden Rundabschnitt 19 an einer nach Art einer Halbschale ausgebildeten Ausnehmung 20 des Lenkradkranzes 2 ab.

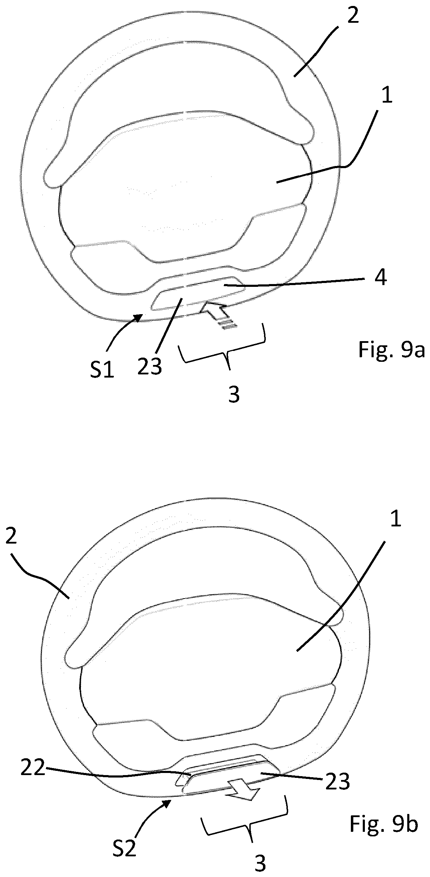

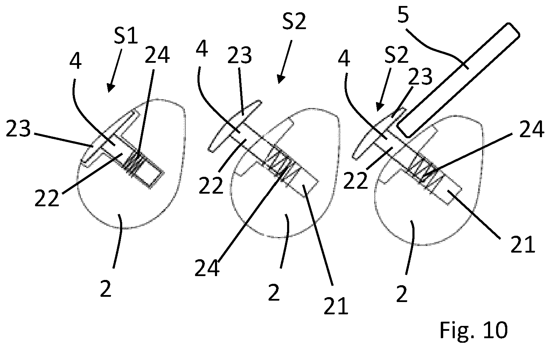

In den Figuren 9 und 10 ist eine exemplarische Ausführungsform dargestellt, die nicht Gegenstand der Erfindung ist. Bei diesem exemplarischen Ausführungsform ist das Stützglied 4 durch Druckbeaufschlagung (Drücken) - also ohne Verschwenken - zwischen der ersten Stützglied-Stellung S1 (Fig. 9a) und der zweiten Stützglied-Stellung S2 (Fig. 9b) bewegbar. Der Aufnahmeabschnitt 3 ist in Form einer Schlitzaufnahme 21 ausgebildet, in welcher ein geometrisch korrespondierend zur Schlitzaufnahme 21 ausgebildeter Lagerflansch 22 des Stützgliedes 4 aufgenommen ist, wobei das Stützglied 4 durch Ausführen einer Druckbetätigung eines mit dem Lagerflansch 22 verbundenen Betätigungsflansches 23 des Stützgliedes 4 zwischen der ersten Stützglied-Stellung S1 und der zweiten Stützglied-Stellung S2 linearbeweglich verschiebbar ist. Auch bei dieser Ausführungsvariante ist das Stützglied 4 in Richtung der zweiten Stützglied-Stellung S2 (Fig. 10 Mitte, Rechts) mittels einer Feder 24 vorgespannt. Ausgehend von der ersten Stützglied-Stellung S1 (Fig. 10, Links) bewirkt die Feder 24 nach Ausführen einer Druckbewegung auf den Betätigungsflansch 23 ein Herausschnellen des Stützgliedes 4 aus der Schlitzaufnahme 21 in Richtung der zweiten Stützglied-Stellung S2. Bei dieser exemplarischen Ausführungsform weist das Stützglied 4 einen T-förmigen Querschnitt auf.

### Bezugszeichenliste

- 1: Lenkradnabe
- 2: Lenkradkranz
- 3: Aufnahmeabschnitt
- 4: Stützglied
- 5: Gegenstand
- 6: Lagerholm
- 7: Rastnocken
- 8: Lagerkragen
- 9: Schenkel
- 10: Öffnung
- 11: erste Rastnockenaufnahme
- 12: zweite Rastnockenaufnahme
- 13: Handhabe
- 14: Federgelenk
- 15: Stützzunge
- 16: Widerlager-Flansch
- 17: Abstützkante
- 18: Ausnehmung
- 19: Rundabschnitt
- 20: Ausnehmung
- 21: Schlitzaufnahme
- 22: Lagerflansch
- 23: Betätigungsflansch
- A: Lenkradnaben-Achse
- B: Lagerabschnitts-Achse
- L: Lenkposition
- N1: erste Nichtlenk-Position
- N2: zweite Nichtlenk-Position
- S1: erste Stützglied-Stellung
- S2: zweite Stützglied-Stellung
- β: Schwenkwinkel
- ε: Schwenkwinkel
- µ: Auslöseschwenkwinkel

## Patentansprüche

1. Lenkvorrichtung für ein Fahrzeug, mit einem Lenkrad, das gebildet ist aus einer Lenkradnabe (1) und einem an der Lenkradnabe (1) schwenkbar gelagerten Lenkradkranz (2), wobei der Lenkradkranz (2) dazu eingerichtet ist, um eine Lenkradnaben-Achse (A) von einer Lenkposition (L) hin zu zumindest einer Nichtlenk-Position **(N1, N2)** und umgekehrt geschwenkt zu werden, wobei der Lenkradkranz (2) einen Aufnahmeabschnitt (3) aufweist, in welchem ein Stützglied (4) aufgenommen ist, wobei das Stützglied (4) dazu eingerichtet ist, eine erste Stützglied-Stellung (S1) und eine zweite Stützglied-Stellung (S2) einzunehmen, und ferner dazu eingerichtet ist in der zweiten Stützglied-Stellung (S2) und bei gleichzeitiger Positionierung des Lenkradkranzes (2) in der zumindest einen Nichtlenk-Position (N1, N2) einen auf dem Lenkradkranz (2) angeordneten Gegenstand (5), beispielsweise einen Tablet-Computer, gegen ein Verrutschen in Richtung des Stützgliedes (4) abzustützen, **dadurch gekennzeichnet, dass** der Aufnahmeabschnitt (3) ein Lagerabschnitt ist, wobei das Stützglied (4) in dem Lagerabschnitt schwenkbar um eine Lagerabschnitts-Achse (B) gelagert ist, nämlich derart, dass das Stützglied (4) eine die erste Stützglied-Stellung (S1) bereitstellende erste Schwenkposition und eine die zweite Stützglied-Stellung (S2) bereitstellende zweite Schwenkposition einnehmen kann, wobei das Stützglied (4) dazu eingerichtet ist, in der zweiten Schwenkposition und bei gleichzeitiger Positionierung des Lenkradkranzes (2) in der zumindest einen Nichtlenk-Position (N1, N2) den auf dem Lenkradkranz (2) angeordneten Gegenstand (5), beispielsweise den Tablet-Computer, gegen ein Verrutschen in Richtung des Stützglieds (4) abzustützen, das Stützglied (4) in Richtung der ersten Schwenkposition federvorgespannt ist, und dass das Stützglied (4) in einem Federgelenk (14) gelagert ist.

2. Lenkvorrichtung nach Anspruch 1, **dadurch gekennzeichnet, dass** der Lenkradkranz (2) dazu eingerichtet ist, eine erste und eine zweite Nichtlenk-Position (N1, N2) einzunehmen, wobei die erste Nichtlenk-Position (N1) vorzugsweise eine um 30° um die Lenkradnaben-Achse (A) in Bezug zur Lenkposition (L) geschwenkte Stellung des Lenkradkranzes (2) betrifft, und wobei die zweite Nichtlenk-Position (N2) vorzugsweise eine um mehr als 30° um die Lenkradnaben-Achse (A) in Bezug zur Lenkposition **(L)** geschwenkte Stellung des Lenkradkranzes (2) betrifft.

3. Lenkvorrichtung nach Anspruch 1, **dadurch gekennzeichnet, dass** das Stützglied (4) in der ersten Stützglied-Stellung (S1) eine Oberfläche des Lenkradkranzes (2) ausbildet.

4. Lenkvorrichtung nach einem der vorangehenden Ansprüche, **dadurch gekennzeichnet, dass** der Lenkradkranz (2) unter Einsatz eines Schwenkantriebs, insbesondere eines elektrischen Schwenkantriebs, um die Lenkradnaben-Achse (A) schwenkbar ist.

5. Lenkvorrichtung nach einem der vorangehenden Ansprüche, **dadurch gekennzeichnet, dass** das Stützglied (4) ein Betätigungsmittel für den Schwenkantrieb bereitstellt, wobei das Stützglied (4) derart mit dem Schwenkantrieb wirkverbunden ist, dass der Schwenkantrieb bei Betätigung des Betätigungsmittels den Lenkradkranz (2) von der Lenkposition **(L)** in die zumindest eine Nichtlenk-Position (N1, N2) oder umgekehrt schwenkt.

6. Lenkvorrichtung nach einem der vorangehenden Ansprüche,
**dadurch gekennzeichnet, dass** das Stützglied (4) ein derartiges Betätigungsmittel für den Schwenkantrieb bereitstellt, bei dem durch Schwenken des Stützglieds (4) von der zweiten Schwenkposition in Richtung einer der ersten Schwenkposition abgewandten Schwenkrichtung um einen vorgegebenen Auslöseschwenkwinkel (µ), eine Schwenkbewegung des Lenkradkranzes (2) von der Lenkposition **(L)** hin zu der ersten Nichtlenk-Position **(N1)** oder von der ersten Nichtlenk-Position **(N1)** zur zweiten Nichtlenk-Position **(N2)** ausgelöst wird.

7. Lenkvorrichtung nach einem der vorangehenden Ansprüche, **dadurch gekennzeichnet, dass** der Lagerabschnitt ein Lagerholm (6) ist, der einen im Wesentlichen kreisförmigen Querschnitt aufweist, wobei an dem Lagerholm (6) ein Rastnocken (7) ausgebildet ist.

8. Lenkvorrichtung nach einem der vorangehenden Ansprüche, **dadurch gekennzeichnet, dass** das Stützglied (4) zwei Lagerkragen (8) aufweist, mit welchen das Stützglied (4) auf dem Lagerholm (6) schwenkbar gelagert ist, wobei ein jeder Lagerkragen (8) zumindest teilweise an die Querschnittsform des Lagerholms (6) angepasst ist.

9. Lenkvorrichtung nach Anspruch 98, **dadurch gekennzeichnet, dass** an dem Lagerkragen (8) eine erste und eine zweite Rastnockenaufnahme (11, 12) ausgebildet ist, in welche der Rastnocken (7) in der ersten respektive zweiten Schwenkposition des Stützglieds (4) eingreift.

10. Lenkvorrichtung nach Anspruch 8 oder 9, **dadurch gekennzeichnet, dass** die Lagerkragen (8) über eine nach Art eines Verbindungsstegs ausgebildete Handhabe (13) miteinander verbunden sind.

11. Lenkvorrichtung nach einem der vorangehenden Ansprüche, **dadurch gekennzeichnet, dass** das Stützglied (4) in der ersten Stützglied-Stellung (S1) ein optisches Dekorelement des Lenkrads ausbildet.

12. Fahrzeug, insbesondere Kraftfahrzeug, mit einer nach einem der Ansprüche 1 bis 11 ausgebildeten Lenkvorrichtung.

## Claims

1. Steering device for a vehicle, having a steering wheel which is formed from a steering wheel hub (1) and a steering wheel rim (2) which is pivotably mounted on the steering wheel hub (1), wherein the steering wheel rim (2) is adapted to be pivoted about a steering wheel hub axis (A) from a steering position (L) to at least one non-steering position (N1, N2) and vice versa, wherein the steering wheel rim (2) has a holding portion (3) in which a support member (4) is held, wherein the support member (4) is adapted to occupy a first support member position (S1) and a second support member position (S2), and is further adapted, in the second support member position (S2) and with the steering wheel rim (2) at the same time positioned in the at least one non-steering position (N1, N2), to support an object (5), for example a tablet computer, arranged on the steering wheel rim (2) against slipping in the direction towards the support member (4), **characterized in that** the holding portion (3) is a bearing portion, wherein the support member (4) is mounted in the bearing portion so as to be pivotable about a bearing portion axis (B), namely such that the support member (4) can occupy a first pivot position which provides the first support member position (S1) and a second pivot position which provides the second support member position (S2), wherein the support member (4) is adapted, in the second pivot position and with the steering wheel rim (2) at the same time positioned in the at least one non-steering position (N1, N2), to support the object (5), for example the tablet computer, arranged on the steering wheel rim (2) against slipping in the direction towards the support member (4), the support member (4) is spring-biased in the direction towards the first pivot position, and **in that** the support member (4) is mounted in a spring joint (14).

2. Steering device according to Claim 1, **characterized in that** the steering wheel rim (2) is adapted to occupy a first and a second non-steering position (N1, N2), wherein the first non-steering position (N1) preferably refers to a position of the steering wheel rim (2) pivoted through 30° about the steering wheel hub axis (A) relative to the steering position (L), and wherein the second non-steering position (N2) preferably refers to a position of the steering wheel rim (2) pivoted through more than 30° about the steering wheel hub axis (A) relative to the steering position (L).

3. Steering device according to Claim 1, **characterized in that** the support member (4) in the first support member position (S1) forms a surface of the steering wheel rim (2).

4. Steering device according to one of the preceding claims, **characterized in that** the steering wheel rim (2) is pivotable about the steering wheel hub axis (A) using a pivot drive, in particular an electric pivot drive.

5. Steering device according to one of the preceding claims, **characterized in that** the support member (4) provides an operating means for the pivot drive, wherein the support member (4) is operatively connected to the pivot drive such that the pivot drive, on operation of the operating means, pivots the steering wheel rim (2) from the steering position (L) into the at least one non-steering position (N1, N2) or vice versa.

6. Steering device according to one of the preceding claims, **characterized in that** the support member (4) provides such an operating means for the pivot drive in which, by pivoting the support member (4) from the second pivot position through a predefined triggering pivot angle (µ) in the direction of a pivot direction away from the first pivot position, a pivoting movement of the steering wheel rim (2) from the steering position (L) to the first non-steering position (N1) or from the first non-steering position (N1) to the second non-steering position (N2) is triggered.

7. Steering device according to one of the preceding claims, **characterized in that** the bearing portion is a bearing rod (6) which has a substantially circular cross section, wherein a latching projection (7) is formed on the bearing rod (6).

8. Steering device according to one of the preceding Claims, **characterized in that** the support member (4) has two bearing collars (8) with which the support member (4) is pivotably mounted on the bearing rod (6), wherein each bearing collar (8) is adapted at least in part to the cross-sectional shape of the bearing rod (6).

9. Steering device according to Claim 8, **characterized in that** there are formed on the bearing collar (8) a first and a second latching projection holder (11, 12) into which the latching projection (7) engages in the first and second pivot positions, respectively, of the support member (4).

10. Steering device according to Claim 8 or 9, **characterized in that** the bearing collars (8) are connected together via a handle (13) which is formed in the manner of a connecting bar.

11. Steering device according to one of the preceding claims, **characterized in that** the support member (4) in the first support member position (S1) forms a visual decorative element of the steering wheel.

12. Vehicle, in particular motor vehicle, having a steering device configured according to one of Claims 1 to 11.

## Revendications

1. Dispositif de direction pour un véhicule, comprenant un volant de direction qui est formé d'un moyeu de volant de direction (1) et d'une couronne de volant de direction (2) montée de manière pivotante sur le moyeu de volant de direction (1), la couronne de volant de direction (2) étant conçue pour être pivotée autour d'un axe de moyeu de volant de direction (A) depuis une position de braquage (L) vers au moins une position de non-braquage (N1, N2) et inversement, la couronne de volant de direction (2) possédant une portion de réception (3) dans laquelle est logé un élément de support (4), l'élément de support (4) étant conçu pour adopter une première position d'élément de support (S1) et une deuxième position d'élément de support (S2), et étant en outre conçu pour, dans la deuxième position d'élément de support (S2) et lors du positionnement simultané de la couronne de volant de direction (2) dans l'au moins une position de non-braquage (N1, N2), soutenir un objet (5) disposé sur la couronne de volant de direction (2), par exemple une tablette électronique, contre un glissement en direction de l'élément de support (4), **caractérisé en ce que** la portion de réception (3) est une portion formant palier, l'élément de support (4) étant monté de manière pivotante dans la portion formant palier autour d'un axe de portion formant palier (B), et ce de telle sorte que l'élément de support (4) peut adopter une première position de pivotement fournissant la première position d'élément de support (S1) et une deuxième position de pivotement fournissant la deuxième position d'élément de support (S2), l'élément de support (4) étant conçu pour, dans la deuxième position de pivotement et lors du positionnement simultané de la couronne de volant de direction (2) dans l'au moins une position de non-braquage (N1, N2), soutenir l'objet (5) disposé sur la couronne de volant de direction (2), par exemple la tablette informatique, contre un glissement en direction de l'élément de support (4), l'élément de support (4) étant précontraint par ressort en direction de la première position de pivotement, et l'élément de support (4) étant logé dans une articulation à ressort (14).

2. Dispositif de direction selon la revendication 1, **caractérisé en ce que** la couronne de volant de direction (2) est conçue pour adopter une première et une deuxième position de non-braquage (N1, N2), la première position de non-braquage (N1) concernant de préférence une position de la couronne de volant de direction (2) pivotée de 30° autour de l'axe de moyeu de volant de direction (A) par rapport à la position de braquage (L), et la deuxième position de non-braquage (N2) concernant de préférence une position de la couronne de volant de direction (2) pivotée de plus de 30° autour de l'axe de moyeu de volant de direction (A) par rapport à la position de braquage (L).

3. Dispositif de direction selon la revendication 1, **caractérisé en ce que** l'élément de support (4), dans la première position (S1) de l'élément de support, forme une surface de la couronne de volant de direction (2).

4. Dispositif de direction selon l'une des revendications précédentes, **caractérisé en ce que** la couronne de volant de direction (2) peut pivoter autour de l'axe de moyeu de volant de direction (A) en utilisant un entraînement pivotant, en particulier d'un entraînement pivotant électrique.

5. Dispositif de direction selon l'une des revendications précédentes, **caractérisé en ce que** l'élément de support (4) fournit un moyen d'actionnement pour le mécanisme de pivotement, l'élément de support (4) étant relié fonctionnellement à l'entraînement pivotant de telle sorte que, lors de l'actionnement du moyen d'actionnement, l'entraînement pivotant fait pivoter la couronne de volant de direction (2) de la position de braquage (L) à l'au moins une position de non-braquage (N1, N2) ou inversement.

6. Dispositif de direction selon l'une des revendications précédentes, **caractérisé en ce que** l'élément de support (4) fournit un moyen d'actionnement pour l'entraînement pivotant, avec lequel, en faisant pivoter l'élément de support (4) depuis la deuxième position de pivotement en direction d'une direction de pivotement opposée à la première position de pivotement d'un angle de pivotement de déclenchement (µ) prédéfini, un mouvement de pivotement de la couronne de volant de direction (2) depuis la position de braquage (L) vers la première position de non-braquage (N1) ou depuis la première position de non-braquage (N1) vers la deuxième position de non-braquage (N2) est déclenché.

7. Dispositif de direction selon l'une des revendications précédentes, **caractérisé en ce que** la portion formant palier est un longeron de palier (6) qui présente une section transversale sensiblement circulaire, une came d'encliquetage (7) étant formée sur le longeron de palier (6).

8. Dispositif de direction selon l'une des revendications précédentes, **caractérisé en ce que** l'élément de support (4) possède deux collerettes de palier (8) avec lesquelles l'élément de support (4) est monté de manière pivotante sur le longeron de palier (6), chaque collerette de palier (8) étant au moins partiellement adaptée à la forme de la section transversale du longeron de palier (6).

9. Dispositif de direction selon la revendication 8, **caractérisé en ce qu'**un premier et un deuxième logements de came d'encliquetage (11, 12) sont formés sur la collerette de palier (8), dans lesquels la came d'encliquetage (7) s'engage respectivement dans la première ou la deuxième position de pivotement de l'élément de support (4).

10. Dispositif de direction selon la revendication 8 ou 9, **caractérisé en ce que** les collerettes de palier (8) sont reliées entre elles par le biais d'une poignée (13) configurée à la manière d'une barrette de liaison.

11. Dispositif de direction selon l'une des revendications précédentes, **caractérisé en ce que** l'élément de support (4) forme, dans la première position d'élément de support (S1), un élément décoratif optique du volant.

12. Véhicule, notamment véhicule automobile, comprenant un dispositif de direction configuré selon l'une des revendications 1 à 11.
